# EUROPEAN PATENT APPLICATION

(11) **EP 2 330 764 A1**
(43) Date of publication of application: **08.06.2011**
(21) Application number: 10175568.4
(22) Date of filing: 07.09.2010
(51) Int. Cl.: H04J 14/02, H04B 10/207, H04N 7/22, H04L 12/28, H04Q 11/00

(54) **Method for processing traffic in an optical network and optical network component**

(30) Priority: 03.12.2009 EP 09177937; 19.05.2010 EP 10163298
(71) Applicant: Nokia Siemens Networks Oy, 02610 Espoo (FI)
(72) Inventor: Schmidt, Ernst-Dieter, 83620 Feldkirchen-Westerham (DE); Gottwald, Erich, 83607 Holzkirchen (DE); Meyer, Walter, 81825 München (DE); Morper, Hans-Jochen, 85253 Erdweg (DE)

(57) **Abstract**

Method for processing traffic in an optical network and optical network component

A method for processing traffic in an optical network is provided, wherein the optical network comprises a transport network with a first fiber and a second fiber, wherein traffic over the first and the second fiber is conveyed in opposite directions; wherein a first traffic is branched off from the first fiber towards an optical entity; wherein said first traffic is processed at the optical entity; and wherein a second traffic is fed from the optical entity onto the second fiber. Also an according optical network component is suggested.

## Description

Method for processing traffic in an optical network and optical network component

The invention relates to a method for processing traffic in an optical network and to an according optical network component.

A passive optical network (PON) is a promising approach regarding fiber-to-the-home (FTTH), fiber-to-the-business (FTTB) and fiber-to-the-curb (FTTC) scenarios, in particular as it overcomes the economic limitations of traditional point-to-point solutions.

Conventional PONs distribute downstream traffic from the optical line terminal (OLT) to optical network units (ONUs) in a broadcast manner while the ONUs send upstream data packets multiplexed in time to the OLT. Hence, communication among the ONUs needs to be conveyed through the OLT involving electronic processing such as buffering and/or scheduling, which results in latency and degrades the throughput of the network.

In fiber-optic communications, wavelength-division multiplexing (WDM) is a technology which multiplexes multiple optical carrier signals on a single optical fiber by using different wavelengths (colors) of laser light to carry different signals. This allows for a multiplication in capacity, in addition to enabling bidirectional communications over one strand of fiber.

WDM systems are divided into different wavelength patterns, conventional or coarse and dense WDM. WDM systems provide, e.g., up to 16 channels in the 3rd transmission window (C-band) of silica fibers of around 1550 nm. Dense WDM uses the same transmission window but with denser channel spacing. Channel plans vary, but a typical system may use 40 channels at 100 GHz spacing or 80 channels at 50 GHz spacing. Some technologies are capable of 25 GHz spacing. Amplification options enable the extension of the usable wavelengths to the L-band, more or less doubling these numbers.

Optical access networks, e.g., a coherent Ultra-Dense Wavelength Division Multiplex (UDWDM) network, are deemed to be the future data access technology.

Within the UDWDM concept, potentially all wavelengths are routed to each ONU. The respective wavelength is selected by the tuning of the local oscillator (LO) laser at the ONU. The selected wavelength is unique to each ONU at any point in time, corresponding to the channel that is assigned to this ONU. Since the wavelength, which is used for communication from the ONU to the OLT (the upstream wavelength), is derived from this selected wavelength (the downstream wavelength), the upstream wavelength is also unique to the ONU and no interference at the OLT occurs between channels assigned to different ONUs.

Today's communication networks are separated into a long haul (LH) segment, typically using dense wavelength division multiplexing (DWDM), metro networks, often using coarse wavelength multiplexing (CWDM), and access networks, which rely on DSL or passive optical networks.

The LH network is a Point-to-Point network which may evolve towards a meshed network, the metro network is a ring network, and the access network has a tree topology. Each segment uses specific technology and components. Interfaces between these networks require optical-electrical-optical (OEO) conversion.

It is also known that a network connection may comprise several stages, e.g., an access stage, an aggregation or metro stage and a core stage. The aggregation, metro or core stages in particular utilize DWDM networks arranged in ring topologies.

It is a disadvantage, however, that a flexible all optical end-to-end connection (without OEO conversion) across the DWDM ring network is not feasible. Hence, it is not possible that merely a small data rate, e.g., 1Gbit/s, is provided by a DWDM ring, because the grids or cells the DWDM ring operates on provide significantly higher data rates only.

The **problem** to be solved is to overcome the disadvantages mentioned above and in particular to provide a solution to utilize an optical metro or core network of a ring or mesh topology for an all optical end-to-end connection.

This problem is solved according to the features of the independent claims. Further embodiments result from the depending claims.

In order to overcome this problem, a method for processing traffic in an optical network is provided,
- wherein the optical network comprises a transport network with a first fiber and a second fiber, wherein traffic over the first and the second fiber is conveyed in opposite directions;
- wherein a first traffic is branched off from the first fiber towards an optical entity;
- wherein said first traffic is processed at the optical entity;
- wherein a second traffic is fed from the optical entity onto the second fiber.

Said traffic may comprise various kinds of data, i.e. user data, signaling data, program data, etc. The optical network comprises an optical transport network, which can be of various topologies. The transport network is in particular an aggregation network, a metro network or a long haul network. The transport network may be a (portion of a) core network arranged for conveying large data rates.

Branching off the traffic from the first fiber may be (i) duplicating the traffic towards the optical entity or (ii) extracting the traffic from the fiber and conveying the traffic extracted towards the optical entity.

This solution allows utilization of optical resources between optical entities in an end-to-end manner. Hence, an optical resource can be used as a circuit-switched connection between two subscribers (one being said optical entity). Advantageously, the transport network can become an integral part of such optical end-to-end connection without any optical-electrical or electrical-optical conversion between the subscribers. This saves processing power, energy and allows utilizing a fine granularity of data rates to be assigned to optical connections that span, e.g., several thousands of kilometers. Hence, a core network can become part of an optical end-to-end connection and a (considerably) small portion of the data rate provided by the core network (or many times the amount of this small portion of the data rate) can be flexibly utilized for such optical end-to-end connection.

In an embodiment, the optical entity may be an optical communication component, in particular at least one of the following:
- an optical line termination;
- an optical network unit;
- an optical network;
- an optical access.

Hence, the optical entity may in particular be any communication equipment comprising an optical component that allows processing of the optical end-to-end connection. It is noted that the optical entity may be an optical network with several optical subscribers, wherein each optical subscriber is assigned at least one of the optical resources. In particular, uplink and downlink connections may utilize different optical resources and may be (symmetrically or asymmetrically) configured to meet the demands of the subscriber or operator.

In another embodiment, the optical entity and a further optical entity conveying said first traffic to the optical entity are connected via an optical end-to-end connection.

Hence, these two optical entities determine an optical end-to-end connection across the transport network. The transport network may be a portion of the optical end-to-end connection.

It is noted that the further optical entity may comprise at least one of the above-mentioned optical communication components.

In a further embodiment, the optical entity and the further optical entity share a first optical resource in one direction of the optical end-to-end connection and a second optical resource in the opposite direction of the optical end-to-end connection.

Hence, the optical end-to-end connection between the two optical entities uses different optical resources for each direction of the communication to provide a bi-directional (full-duplex) connection.

In a next embodiment, the first optical resource and the second optical resource are arranged within at least one wavelength range, data rate range supplied by the transport network.

Thus, the transport network provides an optical resource that could be utilized for the end-to-end connection between the optical entities. The resource of the transport network may be organized in grids or cells spanning a particular wavelength range (e.g., a 50GHz-grid) that can be sub-divided into physical resources, e.g. 32 channels, wherein each channel may provide a given data rate amounting to, e.g., 1Gbit/s. The optical end-to-end connection between the two optical entities may utilize one such channel for each communication direction, wherein the two channels for the bidirectional connection may be arranged adjacent to each other within the grid or cell. As an alternative, the two channels may be distributed among various grids or cells (i.e. resources provided by the transport network).

It is noted that the numbers given above are only examples and may vary according to the particular transport network, the type of resource and/or a customer's demand or a resource availability.

It is further noted that the resources may be particular wavelengths (instead of grids) and/or bandwidths around such wavelengths.

The resource may be configured between an operator of the transport network and a customer in advance, i.e. the operator may assign resources to the customer, wherein the customer can utilize such resource in a transparent and flexible way to connect its entities across the operator's transport network.

It is also an embodiment that the first traffic and the second traffic establish a circuit-switched connection between two optical entities.

Hence, the resource allocation allows establishment of a (semi-permanent or permanent) connection between the optical entities using a resource as assigned.

Pursuant to another embodiment, the first traffic and the second traffic are arranged at different wavelength ranges in one resource of the transport network.

Hence, dependent on the direction of the traffic between the optical entities communicating across the transport network, different resources can be utilized, e.g., different wavelengths, different wavelength ranges or different bandwidths (bandwidth ranges). This ensures that no interference occurs between the first and second traffic.

According to an embodiment, the resource of the transport network comprises at least one frequency grid or a bandwidth around a predetermined frequency.

According to another embodiment, the transport network comprises a ring topology or a mesh topology.

In yet another embodiment, the transport network comprises a DWDM network, in particular a DWDM core network.

According to a next embodiment, the first traffic is branched off from the first fiber by a splitter.

In this case the splitter duplicates the first traffic, i.e. the first traffic remains on the first fiber and the first traffic is conveyed towards the optical entity.

This allows that several taps are arranged along the first fiber. Hence, several nodes may comprise such a splitter to convey the same resource (grid or cell) to different optical entities, wherein each entity may utilize a different portion of the resource. In the example described above, 32 channels within a 50GHz-grid can be used, e.g., for 16 full-duplex connections (a bidirectional connection may utilize two adjacent channels): The very same resource (here: 50GHz-grid) can thus be tapped in 16 different nodes via a splitter to utilize traffic of 16 different (full-duplex) optical end-to-end connection between the respective optical entities.

Pursuant to yet an embodiment, the first traffic is branched off from the first fiber by a filter.

Hence, the traffic branched off by said filter is not further conveyed over the first fiber; instead such traffic is terminated at this very node and only fed towards the optical entity. Therefore, the resources that correspond to the traffic that has been terminated can be re-used for other connections at a next node of the transport network. This advantageously allows re-usage of resources within segments of a ring topology: A particular resource may be independently used for different (logical) connections on different segments of the ring topology, wherein the segments can be functionally separated from one another by providing such filters at the end of each segment.

According to another embodiment, a spectrum washer is arranged between the optical entity and at least one of the fibers of the transport network.

The spectrum washer comprises two AWGs that are connected in series and are supplied to an optical fiber. The spectrum washer "cleans" the optical resources, i.e. it ensures that the information supplied is selectable.

The problem stated above is also solved by an optical network component
- that is connected via an optical element to a first fiber of a transport network and that is connected to a second fiber of the transport network via a combiner, wherein the first fiber and the second fiber convey traffic in opposite directions,
- wherein the optical element is arranged to branch off a first traffic from the first fiber towards an optical entity;
- wherein the combiner is arranged to convey a second traffic from the optical entity onto the second fiber.

It is noted that the features described with regard to the method above are applicable also for this optical network component. The first fiber may be arranged to pass the optical network element and the optical element can be arranged such that the first traffic also passes the optical network element (in case the optical network element is, e.g., a splitter). Accordingly, the second fiber may be arranged to pass the optical network component. Hence, several such optical network elements can be arranged along the transport network utilizing the resources of the transport network (or at least a portion thereof) as described.

According to an embodiment, the optical element is a splitter or a filter.

In case the optical element is realized as a filter, the resource may terminate at the optical network component and can be re-used at a subsequent optical network component for a different connection.

Furthermore, the problem stated above is solved by a communication system comprising at least one such optical network component as described herein.

Embodiments of the invention are shown and illustrated in the following figures:
- Fig.1: shows a concept of how a first group of endpoints communicate with a second group of endpoints via a transport network;
- Fig.2: shows a DWDM ring comprising two lines, each compris- ing at least one optical fiber, wherein two nodes are deployed in the ring and two optical communication entities are connected each via a single optical fi- ber to a node of the DWDM ring;
- Fig.3: shows an exemplary schematic arrangement of a node that is arranged in a DWDM ring topology;
- Fig.4: shows an exemplary embodiment of a spectrum washer comprising two AWGs that are connected in series;
- Fig.5: shows two DWDM rings that are connected via a single fiber, wherein for each DWDM ring, an optical entity is connected to the ring via a node of the ring and the two entities can be connected via an optical end- to-end connection in a circuit-switched manner;
- Fig.6: shows a diagram visualizing an allocation scheme for a resource;
- Fig.7: shows a schematic block diagram based on the scenario shown in Fig.3, wherein instead of the splitter, a filter is arranged within the node.

The approach presented allows an optical end-to-end connection for conveying information via an optical network, said optical network in particular comprising a ring or a mesh topology, e.g., a DWDM ring structure. Such optical network is also referred to as a transport network. It comprises at least two optical fibers (lines) conveying traffic in opposite directions.

The network topology provides resources that can at least partially be utilized for such an end-to-end transmission. It is noted that the end-to-end transmission comprises a transmission from a sender to at least one receiver, in particular to several receivers via at least one wavelength (range) and/or time slot.

The transmission of information from the sender to the at least one receiver thus is achieved in a circuit-switched manner via the optical network. Both ends, i.e. sender and receiver hence utilize the same cell or resource of the optical network, wherein uplink and downlink traffic may be conveyed via different portions of said resource.

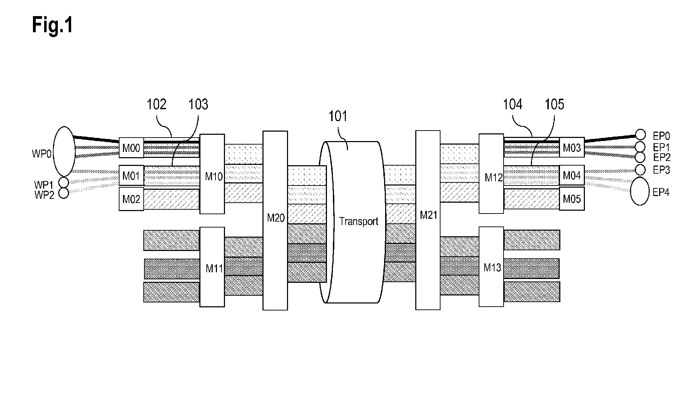

**Fig.1** shows a concept of how a first group of endpoints WP0, WP1, WP2 communicate with a second group of endpoints EP0, EP1, EP2, EP3, EP4 via a transport network 101. The transport network 101 may preferably be or comprise an optical ring network, e.g., a DWDM ring structure.

Resources for such end-to-end communication can be assigned such that conflict-free operation is possible, i.e. each resource may be used once and/or in a way that the resources used do not interfere with each other. Later it will be described as how resources may be re-used, i.e., the same resource may be utilized in different sections of an optical transport network of, e.g., ring or mesh topology, for different logical connections or links.

Hence, the transport network 101 may convey the resources between the endpoints shown in Fig.1 without any need for converting the type of resource. In particular, no conversion from the optical domain of the transport network 101 to the electrical domain is required up to the endpoint itself. Hence, the optical end-to-end connection is maintained via the transport network 101.

A number of endpoints EP0 to EP4 are communicating with a number of endpoints WP0 to WP2, wherein each endpoint may communicate with a different number of remote endpoints. Each end-to-end information exchange uses at least one (optical) resource comprising at least one wavelength (range), e.g., a particular color.

On a first multiplexing layer M00 to M05 the resources can be multiplexed to streams 102, 103, 104, 105. These streams are multiplexed by a subsequent multiplexing layer M10, M12 and by a next multiplexing layer M20, M21 via the transport network 101. The number of multiplexing layers is flexible and may depend on a reach of the network and/or a number of resources available.

Hence, the approach presented provides a flexible access to traffic over a core, aggregation and/or metro network comprising at least one optical network (e.g., ring) structure by utilizing at least one resource of such network for allowing and conveying optical end-to-end communication. Hence, a long-haul network infrastructure can be used for country-wide access in an optical end-to-end manner.

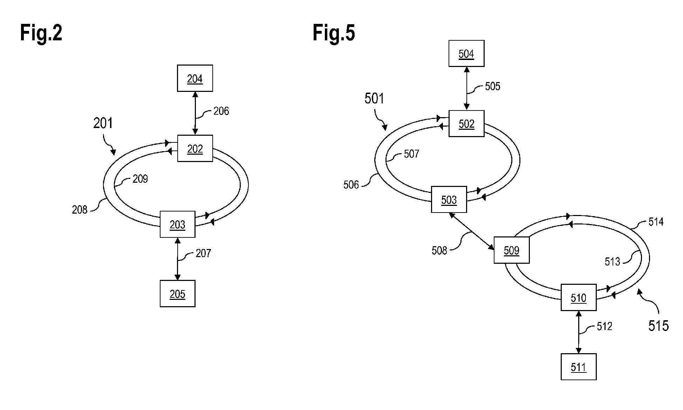

**Fig.2** shows a DWDM ring 201 (comprising two lines 208, 209, each comprising at least one optical fiber) with two nodes 202, 203, wherein a communication entity 204 is connected via a single optical fiber 206 to the node 202 and a communication entity 205 is connected via a single optical fiber 207 to the node 203.

The communication entity 204, 205 (hereinafter referred to as "entity") may comprise an optical transmitter and/or receiver (in particular a transceiver). It could be realized as ONU, OLT or it may be a PON or an NGOA (lambda-per-user concept realized as, e.g., UDWDM PON).

The approach presented allows utilizing the DWDM ring 201 for all optical end-to-end communication between the entities 204 and 205. The entity 204, 205 does not have to become aware of the DWDM ring 201 or the communication network used to provide the optical end-to-end communication. The entities 204, 205 share a common optical resource; the communication between these entities 204, 205 can be achieved without any optical-electrical and/or electrical-optical conversion.

It is noted that instead of the ring topology shown in Fig.2, a mesh topology comprising nodes and edges, wherein each edge has two fibers conveying traffic in opposite directions, can be utilized accordingly.

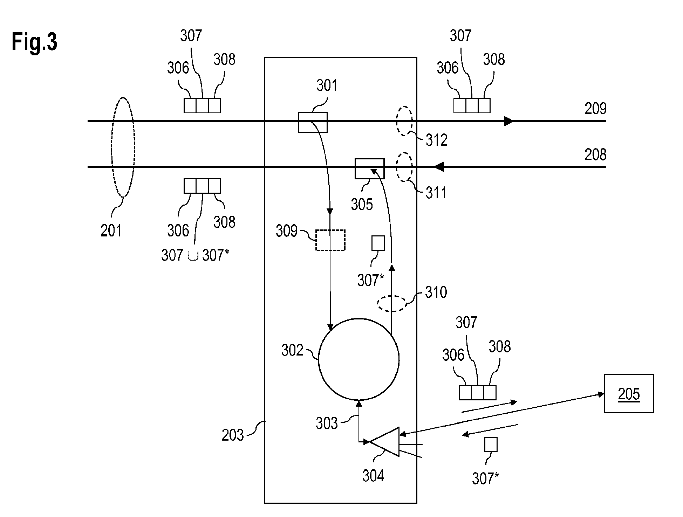

**Fig.3** shows an exemplary schematic arrangement of the node 203 (which applies for the node 202 accordingly).

The DWDM ring 201 comprises the two lines 208 and 209 (optical fibers) as shown in Fig.2. The node 203 comprises a splitter 301 in line 209, which conveys the optical signal also towards a circulator 302 and further via a fiber 303 and a splitter 304 to the entity 205. In this example, the entity 205 receives the full optical spectrum that arrives at the splitter 301, which also leaves the splitter via the line 209. In other words, the splitter 301 duplicates the optical signal and also conveys it towards the circulator 302.

Any optical signal transmitted by the entity 205 is fed via the splitter 304 and the fiber 303 to the circulator 302 and further to via a combiner 305 onto the line 208. Hence, the entity 205 may provide a (response) signal to the sender in the direction from which the previous signal (or message) has been received. In this regard, the DWDM ring 201 is logically utilized as a means for reaching entities via the lines 209, wherein a response is conveyed via the other line 208.

The DWDM ring 201 can be organized in grids, each covering a frequency range of, e.g., 50GHz (also referred to as 50GHz-grid).The 50GHz-grid may utilize a bit rate of, e.g., 10Gbit/s, 40Gbit/s or 100Gbit/s.

In Fig.3, cells 306, 307 and 308 are shown, each of which is a 50GHz-grid or cell (with a corresponding wavelength band). The splitter 301 duplicates the cells 306 to 308, hence the cells 306 to 308 leave the node 203 via the line 209 and also arrive at the entity 205.

As an option, a filter 309 (e.g., an arbitrary waveguide (AWG), see, e.g., http://de.wikipedia.org/wiki/Arrayed-Waveguide Grating) can be deployed after the splitter 301 in order to filter a particular cell (or several cells) for the entity 205. In this example, the filter 309 may be arranged such that only the cell 307 arrives at the entity 205. The filter 309 may operate on a cell basis, i.e., at least one cell gets passed this filter 309. In other words, the filter 309 separates 50GHz-grids (cells) from the DWDM ring 201.

However, if the filter 309 is not present, all cells 306 to 308 are received at the entity 205. The entity 205 is regarded as an optical endpoint. The wavelengths used for downlink traffic towards the entity 205 and the wavelengths used for uplink traffic towards the DWDM ring 201 do not interfere. In addition, it is assumed that the entity 205 communicates with the entity 204 shown in Fig.2 by mutually employing the uplink resource (wavelength) of the counterpart entity as downlink resource (wavelength), i.e. the entity 204 conveys information on a wavelength the entity 205 is listening to and vice versa.

Hence, the whole spectrum of the cell 307/307* can be used for all optical end-to-end communication via the DWDM ring 201. And a portion of this cell 307/307* may be used for the communication between the entity 205 and the entity 204.

The entity 205 extracts a portion of the received cell 307, i.e., the portion to which the entity 205 listens to. A response from this entity 205 (to the entity 204) is conveyed in a different portion of the cell 307 and thus a cell 307* comprising the response signal from the entity 205 is conveyed towards the line 208. It is noted that the modified cell 307* may only comprise the response signal added by the entity 205. The cell 307* is conveyed in uplink direction toward the DWDM ring 201, merged by the combiner 305 onto the existing optical signal (combining the cells 307 and 307*) on the line 208. Hence, the cell 307* is optically combined with an existing cell 307 (arriving via line 308 at the node 203) of the grid.

Hence, the cell 307 destined for the entity 205 is processed at the entity 205 and a response 307* can be sent back utilizing the portion of the spectrum to which the adjacent entity 204 is listening to.

The cell 307 can be used by several optical point-to-point connections (or point-to-multipoint connections) that are realized as an optical end-to-end connection via a predetermined resource. The cell 307 may be structured such that it comprises 16 channels in downstream and 16 channels in upstream direction, wherein a downstream and an upstream channel are realized as a tupel of resources that allocate adjacent wavelengths.

This scheme can be used for optical entity-to-entity communication in an all optical way in case care is taken that the resources within the cell do not interfere with each other, i.e. that different logical communication channels (connections) use disjoint resources. This disjoint utilization of resources can be achieved, e.g., by a network management function or entity or it can be configured statically or dynamically based on the requirements or demands of the network or its subscribers.

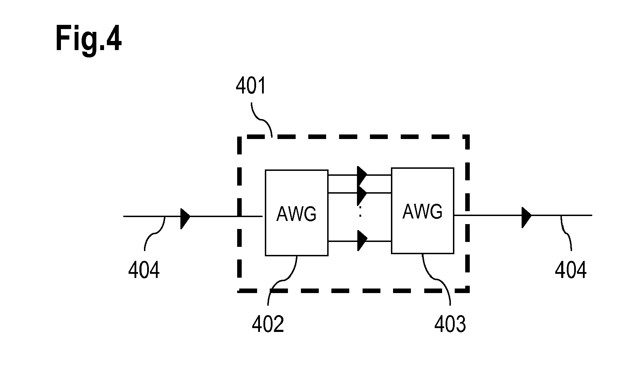

In case optical signals are to be combined (said signals may come from different origins), an optional spectrum washer could be used. At least one spectrum washer 310, 311, 312 could be arranged at various locations of the node 203. **Fig.4** shows an exemplary embodiment of such a spectrum washer 401 comprising two AWGs 402, 403 that are connected in series. The spectrum washer 401 can be inserted into an optical line 404 (fiber). The spectrum washer 401 "cleans" the optical resources, i.e. it ensures that the information supplied is selectable, wherein the AWG 402 separates the grid cells into proper spectrum slices and the AWG 403 re-combines the separated cells to the grid.

**Fig.5** shows an example of how the concept described herein could be used. A DWDM ring 501 with two fibers 506, 507 comprises two nodes 502, 503, wherein an entity 504 is connected via a fiber 505 to the node 502. A DWDM ring 515 with two fibers 513, 514 comprises two nodes 509, 510, wherein an entity 511 is connected via a fiber 512 to the node 510. Furthermore, the node 503 is connected with the node 509 via a fiber 508. Hence, the two DWDM rings 501, 515 can be coupled via a single optical fiber (another fiber could be used for, e.g., backup purposes, if available).

The entity 504 is connected to the DWDM ring 501 via the node 502 and further via the nodes 503, 509 to the DWDM ring 515 and via the node 510 to the entity 511. Both entities 504, 511 may use a portion of a 50GHz-grid (as described above) for conveying information back and forth. For example, the 50GHz-grid used for optical end-to-end communication may comprise 32 sub-bands (i.e. wavelength ranges that could each provide a bandwidth of 1Gbit/s for communication in one direction), wherein 2 sub-bands are logically associated with each other for uplink and downlink communication. Hence, bidirectional communication in an all-optical end-to-end manner can be achieved for 16 connections (logical channels) between subscribers. This corresponds to a circuit-switched connection providing traffic at a rate of 1Gbit/s each in uplink and in downlink direction.

It is noted that this example shows a symmetric bandwidth distribution (1Gbit/s in uplink and in downlink direction). However, different bandwidth allocations can be utilized, in case a higher uplink or downlink bit rate is required. Also, a different number of channels (other than 32 or 16) can be utilized based on the respective scenario. Further, several (different or same) cell grids can be (logically) combined thereby supplying additional bandwidth to be used for optical end-to-end communication. It is in particular noted that the grid size amounting to 50GHz is only an example. Other grid sizes may be applied accordingly.

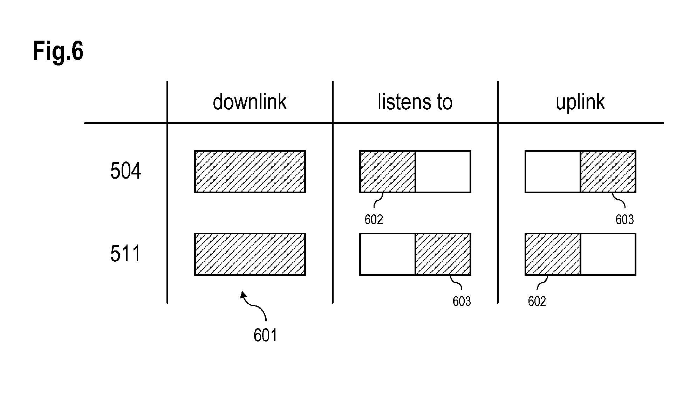

A particular optical resource within a 50GHz-grid or cell can be used for a bi-directional all optical end-to-end connection between the entities 504 and 511 shown in Fig.5 can be symmetrically (or asymmetrically) split. **Fig.6** shows a diagram visualizing an allocation scheme for a resource 601. The entity 504 as well as the entity 511 receives the whole resource 601 (downlink), wherein the entity 504 listens to a portion 602 of the resource 601 received and the entity 511 listens to a portion 603 of the resource received. In uplink direction, the entity 504 utilizes the portion 603 and the entity 511 utilizes the portion 602 for conveying information to the respective other entity.

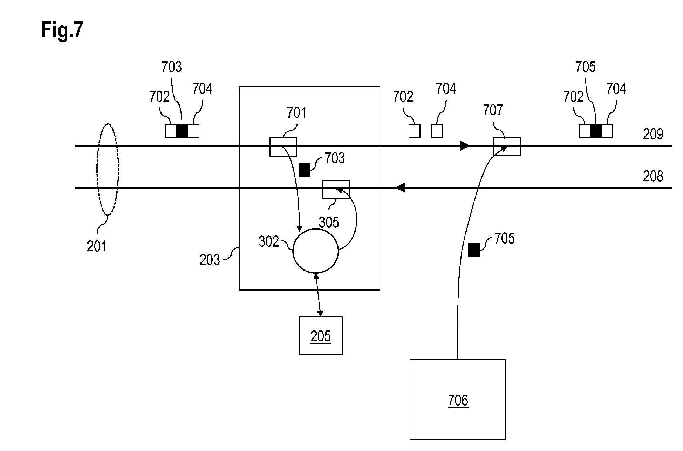

**Fig.7** shows a block diagram based on the scenario shown in Fig.3, wherein instead of the splitter 301, a filter 701 is arranged within the node 203. The remaining structure of the node 203 may correspond to what is shown in and explained with regard to Fig.3 above. However, the inner structure of the node 203 is simplified in Fig.7 for legibility reasons.

The filter 701 extracts a cell 703 (or grid) from the fiber 209 of the ring 201 and conveys it towards the entity 205. As described, the entity 205 may process the cell 703 or a portion thereof and convey an optical (response) signal back to the sender via the fiber 208 (which has opposite direction of the fiber 209).

The filter 701 may extract at least one optical resource, e.g., cell or (50GHz-)grid. The filter 701 may in particular extract several such optical resources. Hence, the optical resource on the fiber 209 after the node 203 is free and can be re-used by a different optical unit or network, e.g., for an optical end-to-end connection between two (other) entities.

In Fig.7, an entity 706, e.g., an OLT (or an optical network, e.g., an NGOA), feeds a signal 705 onto the fiber 209 via a combiner 707, which signal 705 utilizes the same optical resources, e.g., 50GHz-grid, as did the cell 703.

Hence, in direction of the fiber 209 after the node 203 the resource of the dropped signal 703 can be re-used by a different optical entity. It is noted that one resource or several resources may be dropped via the filter 701. It is also possible that all optical resources are dropped (terminated) by the filter 701. The subsequent section of the DWDM ring 201 can then be re-used accordingly.

However, in opposite direction indicated by the fiber 208, the resource for the signal 703 is required at the node 203 and all further nodes of the segment starting with this node 203. Hence, the according resources may be freed prior to it reaching the node 203 or within the node 203. For example, in order to have a freed resource available on the fiber 209 at the node 203, the signal 705 may be dropped in a node or entity prior preceding the node 203. As an option, the node 203 may comprise a filter attached to the fiber 208, which is adjusted to terminate the signal 705. This ensures that no traffic from a logical separate section of the ring goes beyond the border of such section (here such border for the resource comprising the signals 703, 705 is realized by the node 203).

It is noted that in this example the signals 703 and 705 use the same resource (wavelength range).

It is further noted that an optical network other than the ring structure can be used for the purpose described herein. For example, a mesh(ed) network comprising nodes and edges can be utilized accordingly. Such optical network may in particular comprise at least two lines or fibers, wherein at least one line is used for conveying traffic in one direction and at least one other line is used for conveying traffic in the opposite direction.

The solution presented allows connecting entities, e.g., PONs or NGOAs via DWDM portions, in particular DWDM rings of a core network. The entities communicate in an optical end-to-end manner and utilize resources, e.g., wavelength ranges (e.g., at least one grid or cell as described) of the DWDM ring. The resource can be flexibly utilized by the entities; the entities may allocate logical channels of different (or same) data rate(s). Also, the channels in upstream and downstream direction may have the same or different wavelength ranges. The wavelengths or wavelength ranges within the available cell can be statically or dynamically allocated. They can be configured by a network management system or entity pursuant to requirements of the subscribers and/or operators.

For example, an operator of a DWDM ring may shift the frequency range of a cell or grid allocated for optical end-to-end communication. Such frequency shift can be easily adapted by an entity (e.g., NGOA). The connections or (logical) channels can be set to the new frequencies and the optical end-to-end communication is nearly immediately operative in this shifted frequency range. This allows a high degree of flexibility in case a customer leases a frequency range (comprising at least one grid) from an operator and the operator needs to shift the resource for this customer to a different frequency range.

In such a scenario, the operator of the DWDM ring may offer resources based on, e.g., 50GHz-grids, to the customer. The customer may operate an NGOA and may thus utilize the resources of the DWDM ring at his sole discretion. The customer may configure, change, divide, sub-lease, etc. the resources without conferring with the DWDM ring operator first. The services provided over the resources leased by the customer can be utilized transparently in an optical end-to-end manner.

Resources can be any kind of resources and are not limited to a particular grid, e.g., a 50GHz-grid. For example, in order to increase the spectral efficiency of data conveyed across the optical fiber, a variable frequency grid for wavelengths could be used providing data rates amount to, e.g., 200Gbit/s or 400Gbit/s (utilized, e.g., via a liquid crystal-based switching network). An NGOA may in particular allocate a free wavelength within a DWDM system by tuning a laser of the NGOA (sub-)system to an arbitrary wavelength and thus allocating an available or assigned bandwidth. In such scenario, information regarding the admissible bandwidth and/or the admissible wavelength(s) can be exchanged (e.g., via a separate communication channel) between the DWDM operator and the NGOA operator.

### Further Advantages:

The flexibility of the NGOA system (UDWDM PON) allows for a nearly arbitrary wavelength assignment utilized by a communication between an OLT and an ONU (acting as communication entities). Thus, wavelength ranges can be allocated in a flexible manner and a core network, comprising, e.g., a DWDM ring network, can be used to extend the reach of the PON. Hence, existing infrastructure can efficiently be used to allow for optical end-to-end communication across the core network at a distinct data rate (which can be assigned for each such end-to-end connection).

Instead of or in combination with the ring structure, a meshed network can be utilized accordingly.

It is noted that various subscribers (single subscribes or groups of subscribers) may be attached to the extended optical network. Such subscribers may be: base stations, household, firms, etc. Each subscriber may be assigned an optical resource for an optical end-to-end connection. The bandwidth or data rate may be adjusted to meet the demand of the subscriber.

For example, this approach can be used to connect 1000 base stations (eNBs) via one optical fiber over a "long haul" distance.

The optical network described above is separable in space and frequency domains via add/drop multiplexers (space and wavelength multiplex). Therefore, the ring or mesh network can be utilized for, e.g., more than 1000 subscribers separated by dedicated network sections and wavelength domains (providing, e.g., UDWDM with 1000 wavelength channels, wherein a wavelength domain is a set of at least one wavelength channel).

With the proposed solution it is possible to install, configure and maintain bidirectional broadband connections (e.g., from 1Gbit/s to 10Gbit/s) via an existing metro or long haul DWDM network based on, e.g., 50GHz-grids.

In addition, broadband access data links can be supplied to subscribers far-off from an OLT thereby reducing the overall need for installing new fibers.

By using existing infrastructure, the reach of access transport technology at a granularity amounting to, e.g., 1Gbit/s, can be tremendously increased via the long haul and/or metro networks (more than 1000km).

With the proposed solution a reach of an upcoming optical-based transport technology (e.g., via NGOA) in the metro and core domain can be enhanced. This is a significant improvement over current NGOA approaches focusing on the access and/or aggregation portions of the network supplying 100km reach at most.

Also, the solution enables a purely optical-based transport system that allows transporting data from the subscriber to the content provider. Advantageously, no electronics devices, e.g., IP router, etc. are required at an intermediate stage. This saves a significant amount of energy throughout the network.

In addition, a highly flexible use of the existing fiber infrastructure including EDFAs, ROADMs, etc. is possible. Hence, available capacities of the network can be sold or leased in a scenario-specific way dependent on the requirements and needs of potential customers.

The solution further supports several types of virtual networks. The virtual networks can be transparently realized over the all-optical end-to-end connection.

Also, the fiber-based infrastructure can be used by fixed and wireless network operators in various ways. For example, a data rate amounting to 1Gbit/s can be supplied to base stations over the same physical network structure that supplies Internet access for a premium customer over a fixed line.

**List of Abbreviations:**
- AWG: Arbitrary Waveguide
- CWDM: Coarse Wavelength Division Multiplexing
- DSL: Digital Subscriber Line
- DSLAM: Digital Subscriber Line Access Multiplexer
- DWDM: Dense Wavelength Division Multiplexing
- EDFA: Erbium-Doped Fiber Amplifier
- GE: Gigabit Ethernet
- IP: Internet Protocol
- LE: Local Exchange
- LH: Long Haul
- LO: Local Oscillator
- NGOA: Next Generation Optical Access
- OEO: optical-electrical-optical
- OLT: Optical Line Termination
- ONU: Optical Network Unit
- PON: Passive Optical Network
- ROADM: Reconfigurable Optical Add-Drop Multiplexer
- UDWDM: Ultra Dense Wavelength Division Multiplexing
- VOA: Variable Optical Attenuator
- WDM: Wavelength Division Multiplexing

## Claims

1. A method for processing traffic in an optical network,
- wherein the optical network comprises a transport network with a first fiber and a second fiber, wherein traffic over the first and the second fiber is conveyed in opposite directions;
- wherein a first traffic is branched off from the first fiber towards an optical entity;
- wherein said first traffic is processed at the optical entity;
- wherein a second traffic is fed from the optical entity onto the second fiber.

2. The method according to claim 1, wherein the optical entity may be an optical communication component, in particular at least one of the following:
- an optical line termination;
- an optical network unit;
- an optical network;
- an optical access.

3. The method according to any of the preceding claims,
wherein the optical entity and a further optical entity conveying said first traffic to the optical entity are connected via an optical end-to-end connection.

4. The method according to claim 3, wherein the optical entity and the further optical entity share a first optical resource in one direction of the optical end-to-end connection and a second optical resource in the opposite direction of the optical end-to-end connection.

5. The method according to claim 4, wherein the first optical resource and the second optical resource are arranged within at least one wavelength range, data rate range supplied by the transport network.

6. The method according to any of the preceding claims,
wherein the first traffic and the second traffic establish a circuit-switched connection between two optical entities.

7. The method according to any of the preceding claims,
wherein the first traffic and the second traffic are arranged at different wavelength ranges in one resource of the transport network.

8. The method according to claim 7, wherein the resource of the transport network comprises at least one frequency grid or a bandwidth around a predetermined frequency.

9. The method according to any of the preceding claims,
wherein the transport network comprises a ring topology or a mesh topology.

10. The method according to any of the preceding claims,
wherein the transport network comprises a DWDM network.

11. The method according to any of the preceding claims,
wherein the first traffic is branched off from the first fiber by a splitter.

12. The method according to any of the preceding claims,
wherein the first traffic is branched off from the first fiber by a filter.

13. The method according to any of the preceding claims,
wherein a spectrum washer is arranged between the optical entity and at least one of the fibers of the transport network.

14. An optical network component
- that is connected via an optical element to a first fiber of a transport network and that is connected to a second fiber of the transport network via a combiner, wherein the first fiber and the second fiber convey traffic in opposite directions;
- wherein the optical element is arranged to branch off a first traffic from the first fiber towards an optical entity;
- wherein the combiner is arranged to convey a second traffic from the optical entity onto the second fiber.

15. The method according to any of the preceding claims, wherein the optical element is a splitter or a filter.
